# EUROPEAN PATENT SPECIFICATION

(11) **EP 3 427 929 B1**
(45) Date of publication and mention of the grant of the patent: **24.11.2021**
(21) Application number: 17883188.9
(22) Date of filing: 02.06.2017
(51) Int. Cl.: B29C 64/129, B29C 64/291, B33Y 30/00, B29C 35/08, B33Y 40/00, G02B 3/00, G02F 1/13

(54) **LCD TYPE 3D PRINTER**
3D-DRUCKER VOM LCD-TYP
IMPRIMANTE 3D TYPE LCD

(30) Priority: 23.12.2016 KR 20160178008
(43) Date of publication of application: 16.01.2019
(73) Proprietor: Ray Co., Ltd, Hwaseong-si, Gyeonggi-do 18380 (KR)
(72) Inventor: LEE, Sang Chul, Yongin-si Gyeonggi-do 16931 (KR); KIM, Jeong Hwan, Seoul 08371 (KR)
(74) Representative: SSM Sandmair
(86) International application number: PCT/KR2017/005765
(87) International publication number: WO 2018/117351

(56) References cited:
- WO-A1-2016/173100
- WO-A1-2016/184284
- CN-U- 204 451 225
- FR-A1- 2 859 543
- JP-A- H05 162 213
- JP-A- H07 329 191
- JP-A- 2011 060 798
- JP-A- 2015 165 546
- JP-A- 2016 076 501
- US-A1- 2016 200 042

## Description

### TECHNICAL FIELD

The present invention relates to an LCD type 3D printer which makes use of light, and more particularly, to an LCD type 3D printer in which a meniscus lens, or a combination of a meniscus lens and a Fresnel lens is disposed under an LCD panel so that the intensity of light reaching the LCD panel can be uniformly distributed over the entire area of the LCD panel to prolong the lifespan of the LCD panel and the size of the 3D printer can be reduced by making the focal distance between a light source and a lens shorter than that of the conventional method using only a Fresnel lens.

### BACKGROUND ART

Examples of a method for manufacturing a three-dimensional product include a mock-up method for manually manufacturing a three-dimensional product while seeing a drawing, a method for cutting a three-dimensional product using a numerically controlled machine tool, and the like.

The above-mentioned mock-up method is cost-effective but is disadvantageous in that it is difficult and time-consuming to precisely manufacture a product.

In addition, the cutting method using a machine tool can precisely manufacture a product but has a disadvantage in that it takes a lot of manufacturing cost and suffers from a restriction on the producible shape.

In recent years, a 3D printer for manufacturing a three-dimensional shaped product using 3D drawing data designed by a three-dimensional modeling tool has been widely used.

The above-described 3D printer manufactures a three-dimensional molded article by stacking up a material such as a liquid, a powdery polymer or a metal in a lamination manner in accordance with 3D drawing data.

If the 3D printer is used, it is possible to greatly reduce the manufacturing cost and manufacturing time, to manufacture a product in a customer-specific manner, and to easily manufacture a complicated three-dimensional product.

Accordingly, it is possible to easily modify the shape when manufacturing a prototype product, and to reduce the manufacturing cost, the material cost and the labor cost.

The 3D printers having the above-described advantages are used in various fields such as automobile, aviation, architecture, medical care, household appliances and toys.

As the 3D printer, there are known an SLA (Stereo Lithography Apparatus) type in which a laser beam is irradiated on a photo-curable resin to cure the irradiated portion, an SLS (Selective Laser Sintering) type in which a functional polymer or a metal powder is used for sintering, a FDM (Fused Deposition Modeling) type in which a molten resin is extruded to manufacture a product, a DMT (Laser-assist Direct Metal Tooling) type in which a metal is directly shaped by a high-power laser beam, a LOM (Laminated Object Manufacturing) type which is a mechanical bonding and shaping type, a DLP (Digital Light Processing) type in which light is irradiated to the lower portion of a storage tank storing a photo-curable resin to cure the resin, and the like.

Among the aforementioned types, the DLP type is configured to laminate one surface at a time and, therefore, the printing time is short. However, the DLP type has a disadvantage in that the resolution varies depending on the printing area.

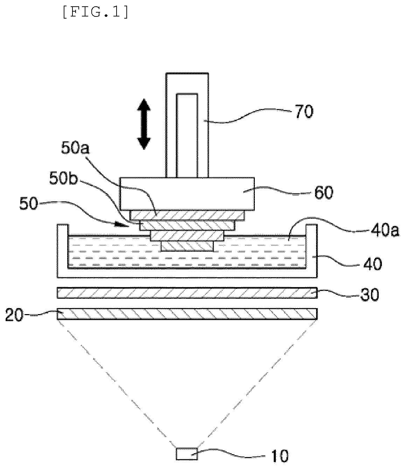

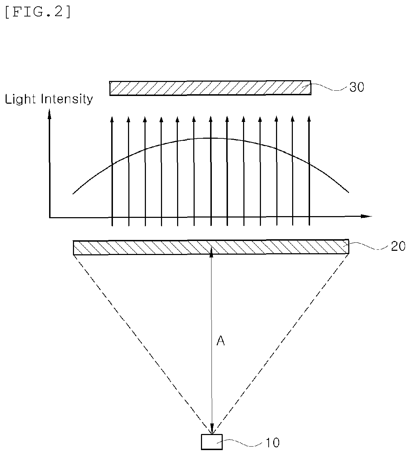

In order to solve such a problem, there has been proposed an LCD type 3D printer using an LCD panel. FIGS. 1 and 2 schematically show the LCD type 3D printer.

As shown in FIG. 1, the conventional LCD type 3D printer includes a light source 10 provided at a lower portion of the 3D printer to irradiate light upward, a lens disposed at a certain distance from the upper portion of the light source 10, an LCD panel 30 provided above the lens, a storage container 40 provided above the LCD panel 30 and configured to store a liquid molding material 40a, a build plate 60 provided above the storage container 40 and configured to laminate a molded product 50, and an elevating member 70 provided above the build plate 60 so as to move up and down.

Hereinafter, a process for manufacturing a molded product by stacking layers in units of 100 µm with the LCD type 3D printer will be described.

First, the liquid molding material 40a is filled in the storage container 40, and the lower surface of the build plate 60 provided at the lower portion of the elevating member 70 is lowered to a distance of 100 *µ*m from the bottom surface of the storage container 40.

Then, the 3D design data is separated into individual sectional images by a computer and then the individual sectional images are transmitted to the LCD panel 30 to generate a first sectional image.

Subsequently, ultraviolet rays are irradiated from the light source 10 so that the liquid molding material 40a is cured according to the first sectional image.

Then, when moving the elevating member 70 upward, a cured first sectional layer 50a is lifted in a state in which the first sectional layer 50a is attached to the lower surface of the build plate 60.

Then, the lower surface of the build plate 60 is lowered to a distance of 200 *µ*m from the bottom surface of the storage container 40.

Then, the distance between the bottom surface of the storage container 40 and the first sectional layer 50a of the molded product 50 becomes 100 *µ*m as in the initial stage.

In this state, when the second sectional image is implemented on the LCD panel 30 and ultraviolet rays are irradiated, the liquid molding material 40a is cured according to the second sectional image.

Subsequently, if the elevating member 70 is moved upward, a second sectional layer 50b of the molded product is formed.

By repeating the above process, it is possible to obtain a molded product 50 in which the molding material 40a is laminated on the build plate 60 at a thickness of 100 *µ*m.

According to the LCD type 3D printer described above, printing can be performed at the resolution of the LCD panel 30 regardless of the printing area.

However, in the above-described LCD type 3D printer, as shown in FIG. 2, the light spreads conically from the light source 10. Thus, the intensity of light is strongest at the central portion and is weakened away from the center.

In addition, the conventional LCD type 3D printer uses a flat Fresnel lens 20. Thus, the unevenly irradiated light passes through the Fresnel lens 20 and reaches the LCD panel 30 as it is.

As a result, the intensity of the light reaching the LCD panel 30 becomes uneven at the central portion and at both edge portions.

If the intensity of the light irradiated on the LCD panel 30 is uneven, the degree of curing of the liquid molding material 40a is changed. Thus, the quality of the molded product 50 is deteriorated.

As a solution to the above problem, there is a method of applying a mask image which is dark at the center and grows brighter away from the center, when a sectional image is implemented on the LCD panel 30.

As an example of applying the mask image to the LCD panel 30, when a data value of a white LCD image through which light passes to the greatest extent is set to 255 and when a data value of a black LCD image through which light cannot pass is set to 0, the data value at the central portion may be set to 160 and the data value at both end portions may be set to 255.

Since the intensity of light is weakened at the central portion of the LCD panel 30, it is possible to uniformly adjust the intensity of light transmitted through the LCD panel 30.

However, when ultraviolet rays are used as a light source, there is a possibility that the LCD panel 30 is damaged by strong ultraviolet rays.

Particularly, when the mask image is applied to the LCD panel 30 while using ultraviolet rays as a light source, the central portion of the LCD panel 30 is irradiated with ultraviolet rays larger in amount than the ultraviolet rays required for actual printing.

That is, the central portion of the LCD panel 30 receives ultraviolet rays in an amount larger than the amount of the ultraviolet rays actually passing through the LCD panel 30. Therefore, there is a problem that the LCD panel 30 is damaged and the service life thereof is shortened.

CN 204451225 U relates to a rapid prototyping apparatus using liquid crystal IXD curable liquid photosensitive resin. Document WO 2016/173100 A1 discloses a LCD type 3D printer, comprising: a light source provided at a lower portion of the 3D printer to irradiate light upward; a lens disposed at a predetermined distance from an upper portion of the light source; an LCD panel provided above the lens; a storage container provided above the LCD panel storing a liquid molding material; a build plate provided above the storage container to hold a molded product and an elevating member provided at an upper portion of the build plate to move up and down. The lens includes an upwardly-convex lens provided between the light source and the LCD panel to reduce a light irradiation angle and to weaken the light irradiated by the light source at the central portion of the LCD panel so that the intensity of light reaching the LCD panel can be adjusted as uniformly as possible without applying a mask image to the LCD panel. The light source is composed of an ultraviolet LED, and the printer further comprises a heat sink provided under the light source and a cooling fan provided under the heat sink. The liquid molding material is composed of a photo-curable liquid resin.

### SUMMARY OF THE INVENTION

In view of the aforementioned problems inherent in the related art, it is an object of the present invention to provide a technique capable of making sure that the light irradiated from a light source uniformly reaches the entire area of an LCD panel.

Another object of the present invention is to provide a technique capable of making uniform the intensity of light transmitted through an LCD panel without applying a mask image to an LCD panel. printer. The invention is defined by the combination of features of claim 1.

In order to achieve the above objects, there is provided an LCD type 3D printer, including: a light source provided at a lower portion of the 3D printer to irradiate light upward; a lens disposed at a predetermined distance from an upper portion of the light source; an LCD panel provided above the lens; a storage container provided above the LCD panel to store a liquid molding material; a build plate provided above the storage container to hold a molded product; and an elevating member provided at an upper portion of the build plate to move up and down, wherein the lens includes an upwardly-convex meniscus lens provided between the light source and the LCD panel to reduce a light irradiation angle.

The lens may further include a Fresnel lens provided between the meniscus lens or the convex lens and the LCD panel.

The light source is composed of an ultraviolet LED.

The lens further includes a condenser lens provided above the light source.

The printer further includes a heat sink provided under the light source.

The printer further includes a cooling fan provided under the heat sink.

The liquid molding material is composed of a photo-curable liquid resin.

According to the present invention, the intensity of the light emitted from the light source can be made uniform before the light reaches the LCD panel, which makes it possible to uniformly cure the liquid molding material and to improve the quality of the molded product.

Further, the intensity of the light reaching the LCD panel can be made uniform without applying the mask image to the LCD panel.

In addition, since the mask image is not applied to the LCD panel, it is possible to prevent overexposure of the LCD panel to ultraviolet rays, thereby extending the service life thereof.

Moreover, the light irradiation angle can be narrowed by the meniscus lens. Thus, the light source can be disposed at a distance shorter than the focal distance of the Fresnel lens, thereby reducing the size of the 3D printer.

### BRIEF DESCRIPTION OF THE DRAWINGS

FIG. 1 is a configuration diagram schematically showing a conventional 3D printer.
FIG. 2 is a view showing the intensity of light passing through a Fresnel lens in a conventional 3D printer.
FIG. 3 is a view showing the intensity of light passing through a meniscus lens in a 3D printer according to a first embodiment of the present invention.
FIG. 4 is a view showing intensity of light passing through a meniscus lens and a Fresnel lens in a 3D printer according to a second embodiment of the present invention.

### DETAILED DESCRIPTION

Preferred embodiments of the present invention will now be described in detail with reference to the accompanying drawings.

### <First Embodiment>

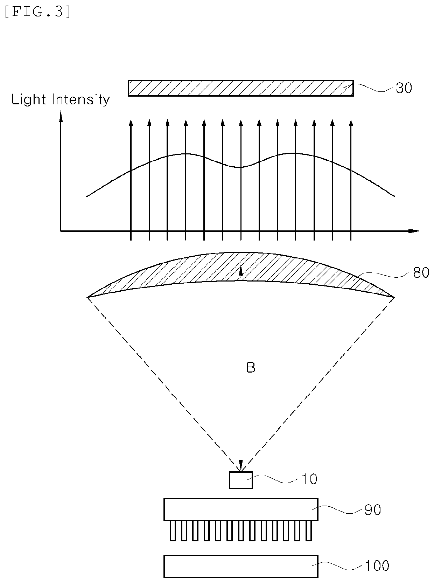

FIG. 3 shows a LCD type 3D printer according to a first embodiment of the present invention. As shown in FIG. 3, the LCD type 3D printer according to the first embodiment of the present invention includes a light source 10 provided at a lower portion of the 3D printer to irradiate light upward, a lens disposed at a predetermined distance from the upper portion of the light source 10, an LCD panel 30 provided above the lens, a storage container 40 provided above the LCD panel 30 to store a liquid molding material 40a, a build plate 60 provided above the storage container 40 to hold a molded product 50, and an elevating member 70 provided at the upper portion of the build plate 60 to move up and down.

An upwardly-convex meniscus lens 80 capable of reducing a light irradiation angle is provided between the light source 10 and the LCD panel 30.

The meniscus lens 80 refers to a lens having two spherical curved surfaces, convex on one side and concave on the other side.

Use of the meniscus lens 80 makes it possible to weaken the intensity of light reaching the central portion of the LCD panel and to make uniform the intensity of light over the entire area of the LCD panel 30.

The light source 10 is composed of an ultraviolet LED, but is not limited thereto.

The liquid molding material 40a is composed of a photo-curable resin.

While not shown in the drawings, a condenser lens is further provided above the light source 10 to reduce the angle of light emitted from the light source 10.

A heat sink 90 is further provided under the light source 10 to dissipate the heat of the light source 10 and a cooling fan 100 is further provided under the heat sink 90.

Hereinafter, a process of manufacturing a molded product by the LCD type 3D printer according to the first embodiment of the present invention will be described.

For the sake of convenience, a case where a molding material is cured and stacked in a unit of 100 *µ*m will be described as an example.

First, the storage container 40 is filled with the liquid molding material 40a. The liquid molding material 40a may be a photo-curable liquid resin.

Then, the lower surface of the build plate 60 provided below the elevating member 70 is lowered to a distance of 100 *µ*m from the bottom surface of the storage container 40 (see FIG. 1).

That is, the interval between the bottom surface of the storage container 40 and the lower surface of the build plate 60 is set to 100 *µ*m.

Then, 3D design data is separated into individual sectional images by a computer and is then transmitted to the LCD panel 30 to implement a first sectional image.

As the ultraviolet light is irradiated from the light source 10, the liquid molding material 40a is cured according to the first sectional image of the LCD panel 30.

That is, one layer of the liquid molding material 40a corresponding to the portion through which ultraviolet rays pass is cured to form a first sectional layer 50a.

Then, as the elevating member 70 is moved up, the build plate 60 is lifted in a state in which the first sectional layer 50a is attached to the lower surface of the build plate 60.

Then, the lower surface of the build plate 60 is lowered again to a distance of 200 *µ*m from the bottom surface of the storage container 40.

The distance between the bottom surface of the storage container 40 and the first sectional layer 50a of the molded product 50 is 100 *µ*m, because the first sectional layer 50a having a thickness of 100 *µ*m is formed on the build plate 60.

In this state, if a second sectional image is implemented on the LCD panel 30 and ultraviolet rays are irradiated, the liquid molding material 40a is cured according to the second sectional image.

Subsequently, as the elevating member 70 is moved up again, a second sectional layer 50b of the molded product 50 is formed.

By repeating the above-described process, it is possible to obtain a molded product 50 in which the layers of the molding material 40a are sequentially stacked on the build plate 60 at a thickness of 100 *µ*m for each layer.

As shown in Fig. 2, the LCD type 3D printer is provided with only a Fresnel lens 20 of a flat plate shape.

As a result, the ultraviolet rays emitted from the light source 10 spread out in the form of a cone. Therefore, as shown by a parabola in FIG. 2, the intensity of the light reaching the LCD panel 30 is strong at the central portion and is gradually reduced toward the edge.

If the intensity of the ultraviolet rays reaching the LCD panel 30 becomes uneven in this way, the degree of curing of the liquid molding material 40a is changed, making it difficult to obtain a high quality molded product.

As a method for solving the above problems, there is a method of applying a mask image to the LCD panel 30.

The mask image darkens the central portion having a strong light intensity and brightens the light toward the edge portion, thereby making uniform the intensity of light at the central portion and the edge portion as far as possible.

When the mask image is applied, the intensity of light transmitted through the LCD panel 30 becomes uniform because the light intensity at the central portion of the LCD panel 30 is weakened.

However, when ultraviolet rays are used as a light source, there is a high possibility that the LCD panel 30 is damaged by strong ultraviolet rays.

Particularly, when a mask image is applied to the LCD panel 30 while using ultraviolet rays as a light source, the LCD panel 30 is exposed to ultraviolet rays larger in amount than the ultraviolet rays actually necessary for curing the liquid molding material 40a.

Accordingly, the light intensity can be made uniform, but the lifespan of the LCD panel 30 is shortened.

According to the present invention, as shown in FIG. 3, a crescent-shaped meniscus lens 80 is used instead of the conventional flat-type Fresnel lens 20, so that the intensity of light can be weakened at the central portion of the LCD panel 30.

In particular, the intensity of light reaching the LCD panel 30 can be adjusted as uniformly as possible without applying a mask image to the LCD panel 30.

Accordingly, the LCD panel 30 is prevented from being overexposed to ultraviolet rays, thereby extending the service life of the LCD panel 30.

### <Second Embodiment>

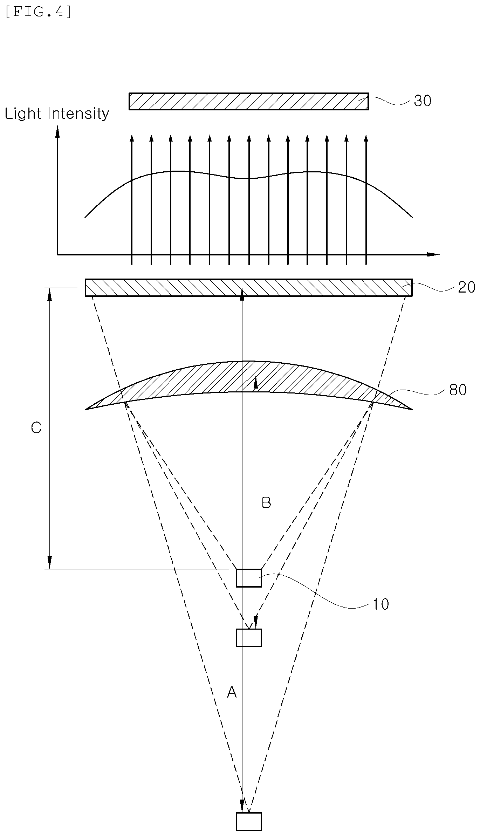

FIG. 4 shows an LCD type 3D printer according to a second embodiment of the present invention.

As compared with the first embodiment, the LCD type 3D printer according to the second embodiment of the present invention further includes a Fresnel lens 20 disposed between the meniscus lens 80 or the convex lens (not shown) and the LCD panel 30.

That is, the LCD type 3D printer according to the second embodiment of the present invention uses a combination of the meniscus lens 80 and the Fresnel lens 20.

The Fresnel lens 20 is used for collecting light into a narrow area and is used for a lighthouse or a searchlight.

According to the second embodiment of the present invention, as shown in FIG. 4, it is possible to reduce the intensity of the light reaching the central portion of the LCD panel 30, thereby making more uniform the light intensity than in the first embodiment shown in FIG. 1.

Further, the focal length of the lens can be further shortened as compared with the case of using one Fresnel lens or one meniscus lens.

As shown in Fig. 4, the focal length when only one Fresnel lens 20 is used is "A", and the focal length when only one meniscus lens 80 is used is "B".

However, if the Fresnel lens 20 and the meniscus lens 80 are used in combination as in the present invention, the focal length is shortened to "C" so that the size of the 3D printer can be reduced.

Other matters are the same as those described in the first embodiment, and therefore duplicate descriptions will be omitted.

While some preferred embodiments of the present invention have been described above, the present invention is not limited to these embodiments. It is to be understood that various modifications may be made without departing from the scope of the invention defined in the claims.

## Claims

1. An LCD type 3D printer, comprising:
a light source (10) provided at a lower portion of the 3D printer to irradiate light upward;
a lens disposed at a predetermined distance from an upper portion of the light source (10);
an LCD panel (30) provided above the lens;
a storage container (40) provided above the LCD panel (30) storing a liquid molding material (40a);
a build plate (60) provided above the storage container (40) to hold a molded product (50); and
an elevating member (70) provided at an upper portion of the build plate (60) to move up and down,
wherein the lens includes an upwardly-convex meniscus lens (80) provided between the light source (10) and the LCD panel (30) to reduce a light irradiation angle and to weaken the light irradiated by the light source (10) at the central portion of the LCD panel (30) so that the intensity of light reaching the LCD panel (30) can be adjusted as uniformly as possible without applying a mask image to the LCD panel (30),
and wherein the light source (10) is composed of an ultraviolet LED,
and wherein the printer further comprises a heat sink (90) provided under the light source (10) and a cooling fan (100) provided under the heat sink (90),
and wherein the liquid molding material (40a) is composed of a photo-curable liquid resin,
and wherein the lens further includes a condenser lens provided above the light source (10).

## Patentansprüche

1. 3D-Drucker vom LCD-Typ mit:
einer Lichtquelle (10), die an einem unteren Abschnitt des 3D-Druckers vorgesehen ist, um Licht nach oben auszustrahlen;
einer Linse, die in einem vorbestimmten Abstand von einem oberen Abschnitt der Lichtquelle (10) angeordnet ist;
einem LCD-Panel (30), das über der Linse vorgesehen ist;
einem Aufbewahrungsbehälter (40), der über dem LCD-Panel (30) vorgesehen ist und ein flüssiges Formmaterial (40a) aufzubewahrt;
einer Aufbauplatte (60), die über dem Aufbewahrungsbehälter (40) vorgesehen ist, um ein geformtes Produkt (50) zu halten; und
einem Hebeelement (70), das an einem oberen Abschnitt der Aufbauplatte (60) bereitgestellt ist, um sich nach oben und unten zu bewegen,
wobei die Linse eine nach oben konvexe Meniskuslinse (80) umfasst, die zwischen der Lichtquelle (10) und dem LCD-Panel (30) vorgesehen ist, um einen Lichtbestrahlungswinkel zu reduzieren und das Licht zu schwächen, das von der Lichtquelle (10) an der zentralen Teil des LCD-Panels (30) abgestrahlt wird, so dass die Intensität des Lichts, das das LCD-Panel (30) erreicht, so gleichmäßig wie möglich eingestellt werden kann, ohne eine Maske auf das LCD-Panel (30) aufzubringen,
und wobei die Lichtquelle (10) aus einer ultravioletten LED besteht.
und wobei der Drucker ferner einen unter der Lichtquelle (10) bereitgestellten Kühlkörper (90) und einen unter dem Kühlkörper (90) bereitgestellten Kühlventilator (100) umfasst.
und wobei das flüssige Formmaterial (40a) aus einem lichthärtbaren flüssigen Harz besteht,
und wobei die Linse ferner eine über der Lichtquelle (10) vorgesehene Kondensorlinse umfasst.

## Revendications

1. Imprimante 3D de type LCD, comprenant :
une source lumineuse (10) prévue au niveau d'une partie inférieure de l'imprimante 3D pour irradier de la lumière vers le haut ;
une lentille disposée à une distance prédéterminée à partir d'une partie supérieure de la source lumineuse (10) ;
un panneau LCD (30) prévu au-dessus de la lentille ;
un conteneur de stockage (40) prévu au-dessus du panneau LCD (30) stockant un matériau de moulage liquide (40a) ;
une plaque de construction (60) prévue au-dessus du conteneur de stockage (40) pour contenir un produit moulé (50) ; et
un élément élévateur (70) prévu au niveau d'une partie supérieure de la plaque de construction (60) pour se déplacer vers le haut et vers le bas,
dans laquelle la lentille comprend une lentille ménisque convexe vers le haut (80) prévue entre la source lumineuse (10) et le panneau LCD (30) pour réduire un angle d'irradiation lumineuse et affaiblir la lumière irradiée par la source lumineuse (10) au niveau de la partie centrale du panneau LCD (30) de sorte que l'intensité de la lumière atteignant le panneau LCD (30) puisse être ajustée aussi uniformément que possible sans appliquer une image de masque sur le panneau LCD (30),
et dans laquelle la source lumineuse (10) est composée d'une LED ultraviolette,
et dans laquelle l'imprimante comprend en outre un dissipateur thermique (90) prévu sous la source lumineuse (10) et un ventilateur de refroidissement (100) disposé sous le dissipateur thermique (90),
et dans laquelle le matériau de moulage liquide (40a) est composé d'une résine liquide photodurcissable,
et dans laquelle la lentille comprend en outre une lentille de condenseur disposée au-dessus de la source lumineuse (10).
